(19) **Europäisches Patentamt**
**European Patent Office**
**Office européen des brevets**

(11) **EP 3 892 403 A1**

(12) **EUROPÄISCHE PATENTANMELDUNG**

(43) Veröffentlichungstag:
**13.10.2021 Patentblatt 2021/41**

(21) Anmeldenummer: **20168652.4**

(22) Anmeldetag: **08.04.2020**

(51) Int Cl.:
*B22F 3/105* (2006.01)          *B33Y 10/00* (2015.01)
*B33Y 70/00* (2020.01)          *B33Y 80/00* (2015.01)
*C22C 1/04* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Heraeus Additive Manufacturing
GmbH
63450 Hanau (DE)**

(72) Erfinder:
• **Jüchter, Vera Katharina
  63450 Hanau (DE)**
• **Spaniol, Bernd
  63450 Hanau (DE)**

(74) Vertreter: **Heraeus IP
Heraeus Holding GmbH
Intellectual Property
Heraeusstraße 12-14
63450 Hanau (DE)**

(54) **ADDITIVE FERTIGUNG VON REFRAKTÄRMETALLEN MIT REDUZIERTEM
VERUNREINIGUNGSGRAD**

(57)    Additives Fertigungsverfahren zur Herstellung von Formteilen aufweisend oder bestehend aus einem Element ausgewählt aus der Gruppe der Refraktärmetalle, wobei für das additive Fertigungsverfahren Refraktärmetallpulver mit einem Sauerstoffgehalt von mindestens 500 mol-ppm eingesetzt wird.

EP 3 892 403 A1

**Beschreibung**

Die Erfindung betrifft ein Verfahren zur additiven Fertigung von Refraktärmetall-haltigen Formteilen mit reduziertem Verunreinigungsgrad sowie die Verwendung von Refraktärmetallpulvern zur Erzeugung von Bauteilen mit verringertem Verunreinigungsgrad.

Additive Fertigung etabliert sich mehr und mehr als Herstellungsverfahren im industriellen Maßstab. Insbesondere bei der Herstellung von Bauteilen mit komplexen Geometrien oder in Bereichen wo es auf Materialersparnisse ankommt, können additive Fertigungsverfahren ihre Vorteile ausspielen.

Eine große Zahl Materialien kann bereits mit additiven Fertigungsverfahren verarbeitet werden. Für Metalle eignen sich insbesondere Pulverbett-basierte Verfahren zur Erzeugung von dichten und mechanisch festen Bauteilen.

In der Norm EN ISO/ASTM 52921:2017 werden die additiven Fertigungsverfahren in Kategorien eingeteilt. Für die additive Fertigung metallischer Formkörper eignen sich beispielsweise

- "Powder Bed Fusion" (Pulverbett-basierte Verfahren): Additives Fertigungsverfahren, bei dem durch einen örtlich selektiven Energieeintrag (z.B. durch einen Laserstrahl oder einen Elektronenstrahl) definierte Bereiche in einem Pulverbett verschmolzen werden;
- "Directed Energy Deposition": Additives Fertigungsverfahren, bei dem gebündelte thermische Energie genutzt wird, um Materialien an ihrem Aufbringungsort durch Verschmelzen miteinander zu verbinden;
- "Binder Jetting": Additives Fertigungsverfahren, bei dem ein flüssiges Bindemittel selektiv aufgetragen wird, um ein Pulver zu verfestigen;
- "Sheet Lamination": Additives Fertigungsverfahren, bei dem Schichten eines Materials flächig verbunden werden, um ein Objekt zu formen.

Bekannte Pulverbett-basierte Verfahren sind selektives Laserschmelzen (SLM) und selektives Elektronenstrahlschmelzen (EBM). Bei diesen Verfahren wird durch schichtweises

Auftragen und anschließendes Verschmelzen von Pulverschichten schrittweise ein Bauteil erzeugt.

Die Grundlagen der additiven Fertigung durch selektives Elektronenstrahlschmelzen beschreiben C. Körner et al. in "Schweißen und Schneiden", 69, 2017, Heft 1-2, S. 30-38. Das Elektronenstrahlschmelzen ist ein Pulverbett-basiertes additives Fertigungsverfahren, in dem ein Metallpulver in Schichten aufgebracht und das Metall in jeder aufgebrachten Schicht in definierten Bereichen durch den Elektronenstrahl aufgeschmolzen wird. Nach der Erstarrung des in einer Schicht aufgeschmolzenen Metalls kann eine weitere Pulverschicht aufgebracht werden. Um eine hohe Prozessstabilität zu erzielen, wird die aufgebrachte Metallpulverschicht vor dem Aufschmelzen bevorzugt einem Vorheizen (z.B. mit einem defokussierten Elektronenstrahl) unterzogen. Dabei wird das Pulver zumindest teilweise versintert und anschließend erfolgt das Aufschmelzen des versinterten Metalls in definierten Bereichen der Schicht mit einem fokussierten Elektronenstrahl. Das Elektronenstrahlschmelzen erfolgt unter Vakuum.

Aufgrund der hohen Affinität zu Sauerstoff und den hohen Schmelztemperaturen stellen Refraktärmetalle in der additiven Fertigung eine Herausforderung dar. Insbesondere die hohe Oberfläche der verwendeten Pulver begünstigt den Eintrag von Sauerstoff in die zu fertigen Formteilen aus Refraktärmetallen. Ein hoher Sauerstoffgehalt im zu fertigenden Formteil kann unteranderem zu einem spröden Material führen. Außerdem wird z.B. bei Niob die Fähigkeit zur Supraleitung durch Sauerstoffverunreinigungen vermindert.

Zum Beispiel für eine hohe mechanische Festigkeit kann es erforderlich, dass die metallischen Bauteile einen geringen Verunreinigungsgrad aufweisen. Insbesondere Verunreinigungen in Form von Sauerstoff können die Bauteile spröde machen oder die Leitfähigkeit reduzieren.

Aus dem Stand der Technik US9023765B1 sind Verfahren zur Herstellung von Niob-Bauteilen bekannt, die hochreine Niobpulver mit einem RRR - Wert von 300 verwenden. Der RRR-Wert ist ein Maß für die Fähigkeit zur Supraleitung. Ein RRR-Wert von 300 erfordert sehr reines Material und hat typischer weise einen Sauerstoffgehalt von ca. 10 ppm. Diese Pulver sind sehr aufwändig herzustellen, zu lagern und zu verarbeiten. Hier erfolgt der Herstellungs- und Verarbeitungsprozess von Niobpulvern fast ausschließlich unter Schutzgasatmosphäre, um den Eintrag von Sauerstoff in das zu fertigende Bauteil zu minimieren. Bisher wurde im Stand der Technik davon ausgegangen, dass ein niedriger Sauerstoffgehalt des Pulvers zwingend notwendig ist, um möglichst reine Bauteile zu fertigen.

Eine Aufgabe der Erfindung bestand darin ein verbessertes additives Fertigungsverfahren bereitzustellen, bei dem einfach handhabbare Pulver verwendet werden können, um qualitativ hochwertige Formteile zu erzeugen.

Insbesondere bestand eine Aufgabe der Erfindung darin, ein kostengünstiges Verfahren bereitzustellen.

Eine weitere Aufgabe bestand darin ein Verfahren bereitzustellen, mit dem möglichst reine Formteile aus Refraktärmetall aufgebaut werden können.

Mindestens eine der voranstehenden Aufgaben wird gelöst durch die Gegenstände der unabhängigen Ansprüche. Bevorzugte Ausführungsformen der Erfindung finden sich in einem oder mehreren Unteransprüchen.

In einem ersten Aspekt betrifft die Erfindung ein additives Fertigungsverfahren zur Herstellung von Formteilen aufweisend oder bestehend aus einem Element ausgewählt aus der Gruppe der Refraktärmetalle, gekennzeichnet durch die Schritte:

a) Auftragen einer ersten Pulverschicht auf ein Substrat, wobei das Pulver Refraktärmetall aufweist,
b) selektives Schmelzen zumindest eines Teils der Pulverschicht mittels Elektronenstrahl,
c) Abkühlen der Schmelze unter die Erstarrungstemperatur unter Erhalt einer ersten Materialschicht,
d) Auftragen einer weiteren Pulverschicht auf die erste Materialschicht, wobei das Pulver Refraktärmetall aufweist
e) selektives Schmelzen zumindest eines Teils der weiteren Pulverschicht mittels Elektronenstrahl,
f) Abkühlen der Schmelze unter die Erstarrungstemperatur unter Erhalt einer weiteren Materialschicht,
g) Wiederholen der Schritte d) - f) bis das Formteil vollständig aufgebaut ist,
wobei das Pulver der Pulverschichten in Schritt a) und d) jeweils einen Sauerstoffgehalt von mindestens 500 mol-ppm aufweist.

Im Rahmen der vorliegenden Erfindung wurde überraschend festgestellt, dass sich selbst mit mit Refraktärmetallpulvern mit einem hohen Sauerstoffgehalt Bauteile mit hoher Reinheit und einem niedrigen Sauerstoffgehalt herstellen lassen.

Insbesondere wurde gefunden, dass mit dem erfindungsgemäßen Verfahren der Sauerstoffgehalt des Formteils gegenüber dem Pulver um mindestens 15 mol-%, insbesondere mindestens 25 mol-% und ganz besonderes um mindestens 100 mol-% gesenkt werden kann.

In einer bevorzugten Ausführung der vorliegenden Erfindung ist das Refraktärmetall ausgewählt aus der Gruppe bestehend aus Wolfram, Niob, Tantal, Chrom, Molybdän oder Rhenium. Bevorzugt ist das Refraktärmetall Wolfram oder Niob, besonders bevorzugt Niob.

Das Refraktärmetall kann ein elementares Refraktärmetall oder eine Legierung eines Refraktärmetalls sein.

Sofern das Refraktärmetall als elementares Refraktärmetall vorliegt, enthält es andere Metalle nur in Form unvermeidlicher Verunreinigungen. Die Verunreinigungen können z.B. in einer Gesamtmenge von weniger als 0,5 Gew%, bevorzugt weniger als 0,2 Gew% oder sogar weniger als 0,1 Gew% vorliegen.

Sofern das Refraktärmetall als Legierung vorliegt, enthält die Legierung ein oder mehrere der oben genannten Refraktärmetalle in einer Menge von mehr als 50 at.%, bevorzugter $\geq$70 at.%, noch bevorzugter $\geq$ 90 at.%, beispielsweise im Bereich von 90 - 99 at.%. Ist das Refraktärmetall beispielsweise Wolfram und liegt dieses als Legierung vor, so kann die Wolfram-enthaltende Legierung beispielsweise ein oder mehrere der folgenden Nicht-Refraktärmetalle ausgewählt aus der Gruppe bestehend aus Ni, Fe, Co und Cu als Legierungselement enthalten. Optional kann ein Teil des Wolframs in der Legierung substituiert sein durch ein oder mehrere der folgenden Refraktärmetalle ausgewählt aus der Gruppe bestehend aus Ta, Mo und Re.

In einer möglichen Ausführung kann das Refraktärmetall in einer Legierung vorliegen. Ist das Refraktärmetall beispielsweise Niob und liegt dieses in einer Legierung vor, so kann die Niob-basierte Legierung beispielsweise ein oder mehrere der folgenden Nicht-Refraktärmetalle aus gewählt aus der Gruppe bestehend aus Sn, Ge, Ti und Zr enthalten. Optional kann ein Teil des Niobs durch ein oder mehrere der Refraktärmetalle substituiert sein die ausgewählt sind aus der Gruppe bestehend aus Ta, Mo und Re.

Das Refraktärmetallpulver kann beispielsweise mittels EIGA (Electrode Induction Melting Inert Gas Atomization) hergestellt werden. Falls benötigt kann aus dem hergestellten Rohpulver mittels Fraktionieren (z.B. Sichten und Sieben) eine geeignete Fraktion entnommen werden, die die erforderliche Partikelgrößenverteilung aufweist. Wie geeignete Pulver fraktioniert werden können ist dem Fachmann bekannt.

Das Refraktärmetall aufweisende Pulver kann beispielsweise eine Volumen-basierte Partikelgrößenverteilung mit einem dso-Wert im Bereich von 10 $\mu$m bis 150 $\mu$m , insbesondere 10 $\mu$m - 100 $\mu$m oder 50 $\mu$m - 150 $\mu$m. In einer andere Ausführungsform kann das Refraktärmetall Pulver beispielsweise eine Volumen-basierte Partikelgrößenverteilung mit einem $d_{50}$-Wert im Bereich von 10 $\mu$m - 50 $\mu$m aufweisen. Bei solchen Partikelgrößenverteilungen kann sich eine besonders bevorzugte Sauerstoffreduktion im Bauteil einstellen, verglichen zum eingesetzten Pulver.

In Schritt a) wird eine erste Pulverschicht auf ein Substrat aufgetragen, wobei das Pulver Refraktärmetall aufweist. Das Auftragen erfolgt beispielsweise mit einer Walze oder einem Rakel. Das Substrat kann beispielsweise eine Bauplatte einer additiven Fertigungsanlagen oder ein auf beliebige Weise hergestelltes Bauteil sein.

In einer bevorzugten Ausführungsform weist die Volumen-basierte Partikelgrößenverteilung des Pulvers einen $d_{10}$-Wert von mindestens 10 $\mu$m und einen $d_{90}$-Wert von höchstens 200 $\mu$m auf. Insbesondere liegt weist die Partikelgrößenverteilung des Pulvers einen $d_{10}$-Wert von mindestens 45 $\mu$m und einen $d_{90}$-Wert von höchstens 150 $\mu$m auf.

In einer weiteren möglichen Ausführungsform weist die Volumen-basierte Partikelgrößenverteilung einen $d_{10}$-Wert von 10 $\mu$m oder mehr, insbesondere 20 $\mu$m oder mehr und ganz besonders 30 $\mu$m oder mehr, z.B. 50 $\mu$m oder mehr, auf. Weiterhin weist die Volumen-basierte Partikelgrößenverteilung bevorzugt einen $d_{90}$-Wert von 200 $\mu$m oder weniger, insbesondere 150 $\mu$m oder weniger, 100 $\mu$m oder weniger und besonders bevorzugt 55 $\mu$m oder weniger auf.

Das pulverförmige Refraktärmetall weist beispielsweise eine BET-Oberfläche von weniger als 0,07 m$^2$/g, bevorzugter weniger als 0,05 m$^2$/g auf.

Der Sauerstoffgehalt des Pulvers der Pulverschicht beträgt mindestens 500 mol-ppm, bevorzugt mindestens 800 mol-ppm oder mindestens 1000 ppm und besonders bevorzugt mindestens 1500 mol-ppm.

Der Sauerstoffgehalt des Pulvers der Pulverschicht kann beispielsweise höchstens 1000 μg/g beträgt. In molaren Mengen ausgedrückt kann der Sauerstoffgehalt beispielsweise höchstens 5000 mol-ppm betragen.

In einer Ausführung der Erfindung wird das Pulver der Pulverschicht geheizt, z.B. auf eine Temperatur im Bereich von 500°C - 1100°C. Bevorzug kann das Pulver der Pulverschicht auf 500°C - 900°C aufgeheizt werden, wenn das Pulver Niob enthält. Bevorzug kann das Pulver der Pulverschicht auf 700°C -1100°C aufgeheizt werden, wenn das Pulver Wolfram enthält.

Die Pulverschicht kann beispielsweise eine Dicke im Bereich von 25 μm - 250 μm aufweisen.

In Schritt b) erfolgt ein selektives Schmelzen zumindest eines Teils der Pulverschicht mittels Elektronenstrahl. Üblicher Weise wird für additive Fertigungsverfahren ein virtuelles Modell (CAD-Datei) eines zu fertigenden Bauteils in einzelne Schichten zerlegt. Dies nennt man auch *Slicing.* Die so berechneten Schichten werden dann einzeln gefertigt und durch Aufeinanderstapeln zum fertigen Formteil zusammengesetzt. Der zumindest ein Teil der Pulverschicht, der erfindungsgemäß selektiv geschmolzen wird, entspricht einer einzelnen berechneten Schicht im virtuellen Modell des Formteils.

Das selektive Schmelzen der Pulverschicht geschieht bevorzugt vollständig, das heißt, die Morphologie der Partikel des Pulvers geht im geschmolzenen Bereich komplett verloren und es entsteht eine homogene Schmelze.

In einer bevorzugten Ausführungsform wird durch das selektive Schmelzen nicht nur das Pulver der aufgetragenen Pulverschicht geschmolzen, sondern auch der darunterliegende Bereich, hier das Substrat. So kann der geschmolzene Teil der Pulverschicht nicht nur innerhalb der Schicht verbunden werden, sondern auch mit dem darunterliegenden Bereich. Eine gute Anbindung der ersten aufgetragenen Schicht des Formteils kann vorteilhaft sein für den weiteren Aufbau des Formteils, da ein Ablösen der darüberliegenden Schicht vermieden werden kann.

Das selektive Schmelzen erfolgt bevorzugt durch linienweises Rastern des selektiv zu schmelzenden Teils. Bevorzugt werden die Linienbreite und der Linienabstand derart gewählt, dass jeder Bereich der aufgetragenen Pulverschicht mindestens zweimal geschmolzen wird. Somit wird bevorzugt jedes oder im Wesentlichen jedes Volumenelement des zu fertigenden Formteils mindestens jeweils zweimal geschmolzen und erstarrt anschließend. Optional können einzelne oder alle Volumenelemente des zu fertigenden Formteils mehr als zweimal geschmolzen werden.

Das selektive Schmelzen erfolgt bevorzugt mit einem Energieeintrag ausgedrückt als Volumenenergie von mindestens 40 J/mm$^3$, insbesondere mindestens 100 J/mm$^3$ und besonders bevorzugt mindestens 250 J/mm$^3$. Dadurch kann der Sauerstoffgehalt besonders effektiv gesenkt werden.

Das selektive Schmelzen erfolgt bevorzugt mit einem Energieeintrag ausgedrückt als Volumenenergie von höchstens 800 J/mm$^3$, insbesondere mindestens 600 J/mm$^3$.

In einer anderen möglichen Ausführung erfolgt das selektive Schmelzen mit einer Volumenenergie im Bereich von 40 J/mm$^3$ - 800 J/mm$^3$.

Berechnet wird die Volumenenergie gemäß VDI-Richtline 3405 wie folgt:

$$E_v = \frac{P}{v_s * h_d * d_z},$$

wobei

$E_v$... Volumenenergie in W/mm$^3$,
$P$... Strahlungsleistung in W,
$V_s$... Scanngeschwindigkeit in mm/s,
$h_d$... Spurabstand in mm und
$d_z$... vorgegebene Schichtdicke gemäß virtuellem Modell (CAD-Datei) angeben.

Das selektive Schmelzen erfolgt vorzugsweise bei einem Druck von 10$^{-3}$ Torr oder weniger, insbesondere 10$^{-4}$ Torr oder weniger und ganz besonders 10$^{-5}$ Torr oder weniger.

In Schritt c) erfolgt ein Abkühlen der Schmelze unter die Erstarrungstemperatur unter Erhalt einer ersten Materialschicht. Die Materialschicht enthält bevorzugt in den selektiv geschmolzenen Teilen der Pulverschicht eine zusammenhängende Struktur. Außerhalb der selektiv geschmolzenen Teile der Pulverschicht liegt bevorzugt nicht zusammenhängendes Pulver vor. Die Materialschicht kann bevorzugt, bezogen auf den Gehalt an Refraktärmetall, die gleiche Zusammensetzung wie das eingesetzte Pulver aufweisen.

Das Abkühlen der Schmelze unter die Erstarrungstemperatur kann durch aktive Kühlung oder durch ein passives abkühlen lassen erfolgen, z.B. indem die Schmelze nicht mehr durch einen Elektronenstrahl erhitzt wird.

In Schritt d) wird eine weitere Pulverschicht auf die erste Materialschicht aufgetragen, wobei das Pulver Refraktärmetall aufweist. Das Auftragen der Pulverschicht erfolgt bevorzugt mit denselben Techniken wie in Schritt a).

In Schritt e) erfolgt ein selektives Schmelzen zumindest eines Teils der weiteren Pulverschicht mittels Elektronenstrahl. Bevorzugt erfolgt das selektive Schmelzen unter den gleichen Bedingungen wie in Schritt b). Die spezifischen Parameter des selektiven Schmelzens der mindestens einen weiteren Pulverschicht können identisch oder verschieden zu den Parametern in Schritt b) sein. Beispielsweise kann der Energieeintrag in die Pulverschicht an den Wärmeabfluss angepasst werden. Bevorzugt wird durch das selektive Schmelzen der weiteren Pulverschicht auch die darunterliegende Materialschicht geschmolzen.

In Schritt f) erfolgt ein Abkühlen der Schmelze unter die Erstarrungstemperatur unter erhalt einer weiteren Materialschicht. Schritt f) erfolgt bevorzugt analog zu Schritt c). Durch das Abkühlen unter die Erstarrungstemperatur verbindet sich die weitere Materialschicht bevorzugt mit der darunter liegenden Materialschicht.

Die Schritte d) bis f) werden sooft durchgeführt, bis das zu fertigende Formteil aus den einzelnen Materialschichten aufgebaut ist.

In einer möglichen Ausführung der Erfindung wird durch das additives Fertigungsverfahren ein Formteil erhalten, wobei das Formteil eine Sauerstoffgehalt aufweist, der mindestens 15% geringer ist als der Sauerstoffgehalt des Pulvers.

In einer weiteren möglichen Ausführung der Erfindung wird durch das additives Fertigungsverfahren ein Formteil erhalten, wobei das Formteil eine Sauerstoffgehalt aufweist, der mindestens 25 mol-% geringer oder 50 mol-% geringer oder insbesondere 80 mol-% geringer ist als der Sauerstoffgehalt des verwendeten Pulvers.

Weiterhin kann optional neben dem Sauerstoffgehalt auch der Stickstoffgehalt in dem gefertigten Formteil verringert sein, gegenüber dem eingesetzten Pulver.

Mit dem erfindungsgemäßen Verfahren können Formteile beliebiger Geometrien hergestellt werden. Insbesondere können durch das Verfahren Formteile erhalten werden, die Verwendung finden als Katalysator, als Bauteile von Hochtemperaturöfen, als Implantat, als Hitzeschutzvorrichtung, als Strahlenschutzkomponenten oder als Supraleiter, z.B. für die Teilchenbeschleuniger- Technologie.

In einem weiteren Aspekt betrifft die Erfindung eine Verwendung von Refraktärmetallpulver aufweisend einen Sauerstoffgehalt von mindestens 500 mol-ppm zur Herstellung von Formteilen mittels additiver Fertigung unter Verwendung eines Elektronenstrahls.

In einem weiteren Aspekt betrifft die Erfindung die Verwendung eines Refraktärmetallpulvers aufweisend einen Sauerstoffgehalt von mindestens 500 mol-ppm zur Herstellung von Formteilen mit einem Sauerstoffgehalt von höchstens 85% bezogen auf den Sauerstoffgehalt des eingesetzten Pulvers, mittels additiver Fertigung unter Verwendung eines Elektronenstrahls.

Die zuvor für das Verfahren beschriebenen Merkmale können analog auch auf die Verwendungen übertragen werden.

In eine bevorzugten Ausführungsform kann ein Refraktärmetallpulver verwendet werden, das einen Sauerstoffgehalt von mindestens 800 mol-ppm aufweist.

In einer möglichen Ausführungsform kann das Refraktärmetallpulver mittels EIGA (Electrode Induction Melting Inert Gas Atomization) oder durch Fällung hergestellt werden.

Bevorzugt wird das Refraktärmetallpulver zur Herstellung eines Formteils mit einer relativen Dichte von mindestens 95%, insbesondere mindestens 97% und besonders bevorzugt mindestens 99 %, verwendet.

Weiterhin bevorzugt hat das Formteil einen Sauerstoffgehalt (in mol-ppm), der mindestens 15 %, insbesondere mindestens 30 % und ganz besonders bevorzugt mindestens 50 % unter dem Sauerstoffgehalt des Refraktärmetallpulvers liegt.

Der aus dem Refraktärmetall gebildete Formkörper weist beispielsweise eine relative Dichte von mindestens 95%, bevorzugter mindestens 97,0%, noch bevorzugter mindestens 98,0% oder sogar mindestens 99,0% auf.

Messmethoden

Relative Dichte

Die relative Dichte $D_{rel}$ (in %) ergibt sich aus $(\rho_{geo} / \rho_{th})$ x 100%, wobei $\rho_{geo}$ die geometrische Dichte des Bauteils und $\rho_{th}$ die theoretische Dichte des Bauteils ist. Die geometrische Dichte kann nach dem Archimedes-Prinzip beispielsweise mit einer hydrostatischen Waage ermittelt werden. Die theoretische Dichte des Bauteils entspricht der theoretischen Dichte des Metalls, aus dem das Bauteil gebildet ist.

Partikelgrößenverteilung

Die Partikelgrößenverteilung kann durch Laserbeugung gemäß ISO 13320:2009 mit dem Gerät "Helos BR/R3" (Sympatec GmbH, Deutschland) bestimmt werden. Der Messbereich beträgt dabei in Abhängigkeit von den im Pulver vorliegenden Partikelgrößen entweder 0,9 - 875 $\mu$m.

Für die Dispergierung der Pulverpartikel kann das Trockendispergiersystem RODODS/M (Sympatec GmbH, Deutschland) mit Schwingrinnendosierer VIBRI (mit Venturi-Düse) verwendete werden. Die Probenmenge beträgt dabei 5 g. Die Wellenlänge der verwendeten Laserstrahlung beträgt 632,8 nm. Die Auswertung kann mit Hilfe der Mie-Theorie erfolgen. Die Partikelgrößen werden als Volumenverteilung erhalten, d.h. im Rahmen der vorliegenden Erfindung wird die Partikelgrößenverteilung in Form einer Volumenverteilungssummenkurve bestimmt.

Aus der durch Laserbeugung gemessenen Partikelgrößenverteilung (Volumenverteilung) können, wie in der ISO 9276-2:2014 beschrieben, die $d_{10}$ -, $d_{50}$ - und $d_{90}$ - Werte berechnet werden.

## Bestimmung des Sauerstoffgehalts

Der Sauerstoffgehalt wird mittels Trägerheißgasextraktion mit angeschlossener Infrarotdetektion bestimmt. Die Messung des Sauerstoffgehalts erfolgt in Anlehnung an die Norm ASTM E 1409 - 2013, die analog für alle Refraktärmetalle angewendet werden kann. Die Messung wurde auf dem Gerät TC-436 der Firma Leco (USA) durchgeführt.

Von den gefertigten Teilen, im Fall der vorliegenden Beispiele sind dies Würfel, werden einige Späne abgetrennt und mit demselben Verfahren wie das Pulver vermessen.

## BET-Oberfläche

Messung erfolgte mit Stickstoff als Adsorbat bei 77 K. Die Bestimmung der BET-Oberfläche erfolgte unter Verwendung der Mehrpunktmethode (ISO 9277:2010).

## Beispiele

Im folgenden Abschnitt wird die allgemeine Erfindung anhand von konkreten Beispielen verdeutlicht.

Es wurden aus unterschiedlichen Refraktärmetallpulvern mittels selektivem Elektronenstrahlschmelzen jeweils Würfel (10x10x10 mm) gefertigt und der Sauerstoffgehalt und die Dichte bestimmt. Folgende Anlage wurde für das Elektronenstrahlschmelzen verwendet: Arcam A2X der Firma Arcam AB. Die Fertigungsbedingung und der Sauerstoffgehalt der jeweils eingesetzten Pulver und der daraus gefertigten Bauteile sind aus Tabelle 1 zu entnehmen. Wie aus den Daten zu erkennen ist, kann in Abhängigkeit des Energieeintrags (angegeben als Volumenenergie in J/mm$^3$) eine Reduktion des Sauerstoffgehalts im fertigen Formteil beobachtet werden. Unterhalb eines bestimmten Wertes nimmt der Sauerstoffgehalt sogar zu, während oberhalb von 20 J/mm$^3$ der Sauerstoffgehalt im Formteil abnimmt.

*Tabelle 1*

| | Material | | Pulverkorngröße $d_{50}$ | Volumenenergie | Mittelwert O-Gehalt | Sauerstoffgehalt im Formteil relativ zum Pulver |
|---|---|---|---|---|---|---|
| | | | $\mu$m | (J/mm$^3$) | mol ppm | mol% |
| 1 | Niob | Pulver | 45-106 | | 987 | |
| 1a | Niob | Formteil | | 20 | 1516 | 154 |
| 2 | Niob | Pulver | 45-106 | | 1413 | |
| 2a | Niob | Formteil | | 120 | 1123 | 81 |
| 3 | Niob | Pulver | 45-106 | | 1976 | |
| 3a | Niob | Formteil | | 141 | 1618 | 82 |
| 4 | Niob | Pulver | 45-106 | | 671 | |
| 4a | Niob | Formteil | | 141 | 549 | 82 |
| 5 | Niob | Pulver | 45-106 | | 2832 | |
| 5a | Niob | Formteil | | 160 | 2104 | 74 |
| 6 | Niob | Pulver | 45 - 106 | | 3085 | |
| 6a | Niob | Formteil | | 240 | 1644 | 53 |
| 6b | Niob | Formteil | | 340 | 1450 | 47 |

(fortgesetzt)

| | Material | | Pulverkorngröße $d_{50}$ | Volumenenergie | Mittelwert O-Gehalt | Sauerstoffgehalt im Formteil relativ zum Pulver |
|---|---|---|---|---|---|---|
| | | | $\mu$m | $(J/mm^3)$ | mol ppm | mol% |
| 6c | Niob | Formteil | | 440 | 1385 | 45 |
| 6d | Niob | Formteil | | 600 | 1089 | 35 |
| | | | | | | |
| 7 | Wolfram | Pulver | 45-106 | | 2080 | |
| 7a | Wolfram | Formteil | | 20 | 3263 | 157 |
| 7b | Wolfram | Formteil | | 50 | 1310 | 63 |
| 7c | Wolfram | Formteil | | 100 | 1126 | 54 |
| 8 | Wolfram | Pulver | 45-106 | | 569 | |
| 8a | Wolfram | Formteil | | 336 | 236 | 41 |
| 9 | Wolfram | Pulver | 45-106 | | 925 | |
| 9a | Wolfram | Formteil | | 600 | 40 | 4 |
| 10 | Wolfram | Pulver | 15-45 | | 971 | |
| 10a | Wolfram | Formteil | | 600 | 46 | 5 |

Beispielsweise kann der Sauerstoffgehalt in einem additiv gefertigten Formteil aus Wolfram gegenüber dem Sauerstoffgehalt im Pulver um 96 mol% gesenkt werden (vgl. Beispiel 9/9a). Der Sauerstoffgehalt eines Niobformteils kann beispielsweise um 65 mol% gegenüber dem Sauerstoffgehalt des verwendeten Pulvers gesenkt werden. Somit ist es möglich auch Refraktärmetallpulver mit einem vergleichsweise hohen Sauerstoffgehalt zur Herstellung von Formteilen mit einem deutlich niedrigeren Sauerstoffgehalt einzusetzen.

**Patentansprüche**

1. Additives Fertigungsverfahren zur Herstellung von Formteilen aufweisend ein Element ausgewählt aus der Gruppe der Refraktärmetalle, enthaltend die Schritte:

   a) Auftragen einer ersten Pulverschicht auf ein Substrat, wobei das Pulver Refraktärmetall aufweist,
   b) selektives Schmelzen zumindest eines Teils der Pulverschicht mittels Elektronenstrahl,
   c) Abkühlen der Schmelze unter die Erstarrungstemperatur unter Erhalt einer ersten Materialschicht,
   d) Auftragen einer weiteren Pulverschicht auf die erste Materialschicht, wobei das Pulver Refraktärmetall aufweist,
   e) selektives Schmelzen zumindest eines Teils der weiteren Pulverschicht mittels Elektronenstrahl,
   f) Abkühlen der Schmelze unter die Erstarrungstemperatur unter Erhalt einer weiteren Materialschicht,
   g) Wiederholen der Schritte d) - f) bis das Formteil vollständig aufgebaut ist,
   wobei das Pulver der Pulverschichten in Schritt a) und d) jeweils einen Sauerstoffgehalt von mindestens 500 mol-ppm aufweist.

2. Additives Fertigungsverfahren gemäß Anspruch 1, wobei das Schmelzen in den Schritten b) und e) jeweils mit einer Volumenenergie von mindestens 40 J/mm$^3$, erfolgt.

3. Additives Fertigungsverfahren gemäß Anspruch 1 oder 2, wobei der Sauerstoffgehalt des Pulvers der Pulverschicht höchstens 5000 mol ppm beträgt.

4. Additives Fertigungsverfahren gemäß einem der Ansprüche 1 - 3, wobei das Refraktärmetall ausgewählt ist aus Niob und Wolfram, insbesondere Niob.

5. Additives Fertigungsverfahren gemäß einem der Ansprüche 1 - 4, wobei die Partikel des Pulvers einen mittlere Partikelgrößendurchmesser $d_{50}$ im Bereich von 10 bis 150 $\mu$m, insbesondere 10 $\mu$m - 100 $\mu$m und ganz besonders bevorzugt im Bereich von 10 - 50$\mu$m aufweist.

6. Additives Fertigungsverfahren gemäß einem der Ansprüche 1 - 5, wobei das Formteil eine Sauerstoffgehalt aufweist, der mindestens 15% geringer ist als der Sauerstoffgehalt des Pulvers.

7. Additives Fertigungsverfahren gemäß einem der Ansprüche 1 - 6, wobei das Formteil eine Sauerstoffgehalt aufweist, der mindestens 25% geringer ist als der Sauerstoffgehalt des Pulvers.

8. Additives Fertigungsverfahren gemäß einem der Ansprüche 1 - 7, wobei das selektive Schmelzen jeweils in einem Bereich erfolgt, der durch Zerlegen eines Computermodells des Formteils in eine definierte Anzahl von aufeinanderfolgenden Schichten erhalten wird.

9. Additives Fertigungsverfahren gemäß einem der Ansprüche 1 - 8, wobei jedes oder im Wesentlichen jedes Volumenelement des zu fertigenden Formteils mindestens zweimal geschmolzen wird und jeweils anschließend erstarrt.

10. Additives Fertigungsverfahren gemäß einem der Ansprüche 1 - 9, wobei das Pulver einen $d_{10}$-Wert von mindestens 10 $\mu$m und einen $d_{90}$-Wert von höchstens 200 $\mu$m aufweist.

11. Verwendung von Refraktärmetallpulver aufweisend einen Sauerstoffgehalt von mindestens 500 mol-ppm zur Herstellung von Formteilen mittels additiver Fertigung unter Verwendung eines Elektronenstrahls.

12. Verwendung gemäß Anspruch 11, wobei das Refraktärmetallpulver mittels EIGA oder Fällung hergestellt wurde.

13. Verwendung gemäß einem der Ansprüche 11 oder 12, wobei das Formteil eine relative Dichte von mindestens 95%, insbesondere mindestens 97% und besonders bevorzugt mindestens 99 %, aufweist.

14. Verwendung gemäß einem der Ansprüche 11 - 13, wobei das Formteil einen Sauerstoffgehalt aufweist, der mindestens 15 % unter dem Sauerstoffgehalt des Refraktärmetallpulver liegt.

15. Verwendung gemäß einem der Ansprüche 11 - 14, wobei der Energieeintrag durch den Elektronenstrahl mindestens 40 J/mm$^3$ beträgt.

**Europäisches Patentamt**
**European Patent Office**
**Office européen des brevets**

# EUROPÄISCHER RECHERCHENBERICHT

Nummer der Anmeldung

EP 20 16 8652

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2019/068117 A1 (PLANSEE SE [AT]) 11. April 2019 (2019-04-11) * Ansprüche 1-19 * * Seite 1, Zeile 27 - Seite 2, Zeile 11 * * Seite 7, Zeile 18 - Seite 8, Zeile 7 * * Seite 20, Zeilen 1-11 * * Seite 24, Zeilen 1,2 * * Tabelle 1 * ----- | 1-15 | INV. B22F3/105 B33Y10/00 B33Y70/00 B33Y80/00 C22C1/04 |
| X | AT 16 308 U2 (PLANSEE SE [AT]) 15. Juni 2019 (2019-06-15) * Absätze [0024], [0064] * * Ansprüche 1-18 * ----- | 1,3-5,11 | |
| X | AT 16 307 U2 (PLANSEE SE [AT]) 15. Juni 2019 (2019-06-15) * Absatz [0016] * * Ansprüche 1-17 * ----- | 1,3,4,11 | |
| A | WO 2016/150720 A1 (SIEMENS AG [DE]) 29. September 2016 (2016-09-29) * Ansprüche 1-13 * * Absatz [0003] * ----- | 1-15 | RECHERCHIERTE SACHGEBIETE (IPC) B22F C22C B33Y |

Der vorliegende Recherchenbericht wurde für alle Patentansprüche erstellt

| Recherchenort | Abschlußdatum der Recherche | Prüfer |
|---|---|---|
| Den Haag | 10. August 2020 | Reich, Claus |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 8652

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2020

| Im Recherchenbericht angeführtes Patentdokument | Datum der Veröffentlichung | Mitglied(er) der Patentfamilie | Datum der Veröffentlichung |
|---|---|---|---|
| WO 2019068117 A1 | 11-04-2019 | AT 16217 U1<br>CN 111511486 A<br>EP 3691815 A1<br>KR 20200066326 A<br>TW 201932216 A<br>WO 2019068117 A1 | 15-03-2019<br>07-08-2020<br>12-08-2020<br>09-06-2020<br>16-08-2019<br>11-04-2019 |
| AT 16308 U2 | 15-06-2019 | AT 16308 U2<br>WO 2020102834 A1 | 15-06-2019<br>28-05-2020 |
| AT 16307 U2 | 15-06-2019 | AT 16307 U2<br>WO 2020102832 A1 | 15-06-2019<br>28-05-2020 |
| WO 2016150720 A1 | 29-09-2016 | CN 107427915 A<br>DE 102015205316 A1<br>EP 3253513 A1<br>US 2018104741 A1<br>WO 2016150720 A1 | 01-12-2017<br>29-09-2016<br>13-12-2017<br>19-04-2018<br>29-09-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 9023765 B1

**In der Beschreibung aufgeführte Nicht-Patentliteratur**

• **C. KÖRNER et al.** *Schweißen und Schneiden,* 2017, vol. 69 (1-2), 30-38